# FASCICULE DE BREVET EUROPEEN

(11) **EP 3 447 218 B1**
(45) Date de publication et mention de la délivrance du brevet: **03.06.2020**
(21) Numéro de dépôt: 17187576.8
(22) Date de dépôt: 23.08.2017
(51) Int. Cl.: E05B 77/06, E05B 85/16

(54) **SYSTÈME DE VERROUILLAGE ÉQUIPÉ D'UNE POIGNÉE ET D'UN SYSTÈME INERTIEL DÉPORTÉ**
VERRIEGELUNGSSYSTEM, DAS MIT EINEM GRIFF UND EINEM VERSETZTEN TRÄGHEITSSYSTEM AUSGESTATTET IST
LOCKING SYSTEM PROVIDED WITH A HANDLE AND AN OFFSET INERTIAL SYSTEM

(43) Date de publication de la demande: 27.02.2019
(73) Titulaire: U-Shin Italia S.p.A., 10044 Pianezza (IT)
(72) Inventeur: GUERIN, Anthony, 10044 PIANEZZA (IT); OSTOVARI-FAR, Siavash, 10044 PIANEZZA (IT); ROCCI, Antonio, 10044 PIANEZZA (IT); ILARDO, Simone, 10044 PIANEZZA (IT)
(74) Mandataire: Chevalier, Renaud Philippe

(56) Documents cités:
- EP-A1- 3 106 596
- WO-A1-2006/003197
- WO-A1-2010/142607
- US-A1- 2007 069 532
- US-B1- 9 567 777

## Description

L'invention concerne un système de verrouillage pour ouvrant de véhicule automobile comprenant une poignée d'ouverture associée à un système de sécurité inertiel déporté.

On connait une poignée pour ouvrant de véhicule automobile qui comporte un châssis fixé sur l'ouvrant, un levier de préhension et un levier de transmission.

Le levier de préhension comprend un élément de préhension qui est agencé du côté externe de l'ouvrant pour permettre sa préhension par un utilisateur en vue d'ouvrir l'ouvrant.

A cet effet, le levier de préhension est monté mobile en rotation par rapport au châssis autour d'un premier axe, entre au moins une position de repos et une position de commande pour l'ouverture d'un verrou de l'ouvrant.

Aussi, le levier de transmission est monté pivotant par rapport au châssis autour d'un second axe de rotation, entre une position de repos et une position d'actionnement dans laquelle le levier de transmission actionne l'ouverture du verrou, le levier de transmission étant entraîné en rotation par le levier de préhension.

Par soucis de sécurité, il est connu d'associer un système de sécurité inertiel à la poignée pour éviter l'actionnement intempestif de la poignée en cas de choc du véhicule.

On connait notamment un système de sécurité inertiel qui est décrit dans le document WO-2004/042177.Un autre système de sécurité inertiel est décrit dans le document US 9567777.

Le système de sécurité inertiel décrit dans le document WO-2004/042177 comporte un balancier qui s'étend depuis une première extrémité qui porte une masse d'inertie, jusqu'à une seconde extrémité qui forme un doigt de blocage.

Le balancier est monté pivotant entre une position de repos et une position de blocage dans laquelle le doigt de blocage du balancier est positionné sur le chemin du levier d'actionnement de sorte que le doigt de blocage coopère avec une face de blocage du levier d'actionnement pour empêcher la rotation du levier de transmission, et donc l'ouverture de l'ouvrant.

Le pivotement du balancier est provoqué par la force d'accélération qui est appliquée sur la masse d'inertie en cas de choc contre le véhicule.

Bien que la poignée décrite dans le document WO-2004/042177 présente un système inertiel efficace, la réactivité du système inertiel peut être améliorée.

Dans ce but, la présente invention se rapporte à un système de verrouillage pour ouvrant de véhicule automobile comprenant un ouvrant qui s'étend longitudinalement, dans un plan vertical, depuis un bord avant jusqu'à un bord arrière, l'ouvrant comprenant une zone centrale qui est interposée longitudinalement entre le bord avant et le bord arrière, et le système de verrouillage comportant une poignée qui comprend :
- un châssis qui est adapté pour être fixé sur l'ouvrant,
- un levier de préhension qui est monté mobile en rotation par rapport au châssis autour d'un premier axe, entre au moins une position de repos et une position de commande pour l'ouverture d'un verrou de l'ouvrant,
- un élément de préhension qui est agencé d'un côté externe de l'ouvrant et qui est conçu pour permettre à un utilisateur d'actionner le levier de préhension, l'élément de préhension étant délimité longitudinalement par une extrémité avant et une extrémité arrière,
- un levier de transmission qui est monté pivotant par rapport au châssis autour d'un second axe de rotation, entre une position de repos et une position d'actionnement dans laquelle le levier de transmission actionne l'ouverture du verrou, le levier de transmission étant entraîné en rotation par le levier de préhension,
- au moins un premier système de sécurité inertiel qui est monté sur le châssis et qui comporte un balancier qui porte une masse d'inertie, le balancier étant monté pivotant entre une position de repos et une position de blocage dans laquelle le balancier empêche la rotation du levier de transmission, en cas de choc,
caractérisé en ce que l'axe de rotation du levier de préhension s'étend globalement verticalement à l'avant de l'extrémité avant de l'élément de préhension, la masse d'inertie étant agencée longitudinalement en avant de l'axe de rotation du levier de préhension.

La position de la masse d'inertie en avant de l'élément de préhension permet d'approcher la masse d'inertie vers la zone centrale de l'ouvrant.

Or, on constate que lors d'un choc violent du véhicule contre un obstacle, la zone centrale de l'ouvrant se déforme avec plus de vélocité que la périphérie de l'ouvrant, de part la plus grande souplesse de la zone centrale de l'ouvrant par rapport à la périphérie de l'ouvrant.

Autrement dit, la zone centrale de l'ouvrant présente une accélération plus forte que la périphérie de l'ouvrant, favorisant l'entraînement réactif du balancier du système de sécurité.

Ainsi, plus la masse d'inertie du système de sécurité inertiel est agencée proche de la zone centrale de l'ouvrant, plus le système de sécurité inertiel est réactif pour bloquer l'ouverture le mécanisme d'ouverture de l'ouvrant.

Selon l'invention, l'axe de rotation du levier de préhension s'étend globalement verticalement à l'avant de l'extrémité avant de l'élément de préhension, la masse d'inertie étant agencée longitudinalement en avant de l'axe de rotation du levier de préhension.

Cette caractéristique d'agencement permet d'approcher la masse d'inertie vers la zone centrale de l'ouvrant.

Selon une autre caractéristique, la masse d'inertie est adaptée pour être agencée longitudinalement entre la zone centrale de l'ouvrant et l'axe de rotation du levier de préhension.

Cette caractéristique d'agencement permet également d'approcher la masse d'inertie vers la zone centrale de l'ouvrant.

Selon une autre caractéristique, l'élément de préhension présente une forme allongée qui s'étend longitudinalement depuis son extrémité avant jusqu'à son extrémité arrière.

Selon une autre caractéristique, le second axe de rotation du levier de transmission s'étend transversalement, perpendiculairement à l'axe de rotation du levier de préhension.

Selon une autre caractéristique, le balancier s'étend longitudinalement, depuis une extrémité arrière, jusqu'à une extrémité avant qui porte la masse d'inertie et qui comprend un doigt de blocage conçu pour coopérer avec une face de blocage délimitée par le levier de transmission pour s'opposer à la rotation du levier de transmission en cas de choc, le balancier étant monté pivotant autour d'un troisième axe de rotation vertical qui est interposé entre l'extrémité arrière et l'extrémité avant du balancier.

Selon une autre caractéristique, l'élément de préhension est adapté pour affleurer une face externe de l'ouvrant lorsque le levier de préhension occupe sa position de repos, ladite face externe étant destinée à être agencée à l'extérieur du véhicule.

Selon une autre caractéristique, la poignée comporte un second système de sécurité inertiel comportant un balancier qui porte une masse d'inertie, le balancier étant monté pivotant entre une position de repos et une position de blocage dans laquelle le balancier empêche la rotation du levier de transmission, en cas de choc, la masse d'inertie du second système de sécurité étant agencée longitudinalement en avant de l'extrémité avant de l'élément de préhension, et en ce que le second système de sécurité et le premier système de sécurité sont conçus pour être activés chacun en réponse à une plage d'intensités de chocs différente.

Cette caractéristique permet de proposer un système de verrouillage qui présente une large plage d'utilisation.

L'invention concerne également un ouvrant de véhicule automobile comprenant un système de verrouillage du type décrit précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective qui illustre une poignée et un ouvrant de véhicule automobile appartenant au système de verrouillage selon l'invention ;
- la figure 2 est une vue de face qui illustre le levier de préhension de la poignée de la figure 1 dans sa position de repos et un premier système de sécurité inertiel, avec le châssis de la poignée ;
- la figure 3 est une vue de dos qui illustre le levier de transmission dans sa position de repos, sans le châssis ;
- la figure 4 est une vue de dos qui illustre le levier de transmission dans sa position d'actionnement, sans le châssis ;
- la figure 5 est une vue de dessus, qui illustre le levier de transmission dans sa position de commande, sans le châssis ;
- la figure 6 est une vue de détail en perspective qui illustre le levier de préhension dans sa position de commande et le levier de transmission dans sa position d'actionnement ;
- la figure 7 est une vue de détail en perspective qui illustre le balancier dans sa position de repos et le levier de transmission dans sa position de repos ;
- la figure 8 est une vue de détail en perspective qui illustre le balancier dans sa position de repos et le levier de transmission dans sa position d'actionnement ;
- la figure 9 est une vue de détail en perspective qui illustre le balancier dans sa position de blocage et le levier de transmission dans sa position de repos ;
- la figure 10 est une vue de détail en perspective qui illustre le balancier dans sa position de blocage et le levier de transmission dans une position bloquée ;
- la figure 11 est une vue de détail en perspective et en coupe longitudinale qui illustre le balancier ;
- la figure 12 est une vue de détail en perspective qui illustre le balancier ;
- la figure 13 est une vue de détail en perspective qui illustre un second système de sécurité inertiel selon l'invention.

Dans la présente demande, les termes « haut », « bas », « supérieur », « inférieur », « horizontal », « vertical », et leurs dérivés font référence à la position ou à l'orientation d'un élément ou d'un composant, cette position ou cette orientation étant considérée lorsque le véhicule est en configuration de service sur un sol horizontal.

De plus, pour clarifier la description et les revendications, on adoptera à titre non limitatif la terminologie longitudinal, vertical et transversal en référence au trièdre L, V, T indiqué aux figures.

Sur l'ensemble de ces figures, des références identiques ou analogues représentent des organes ou ensembles d'organes identiques ou analogues.

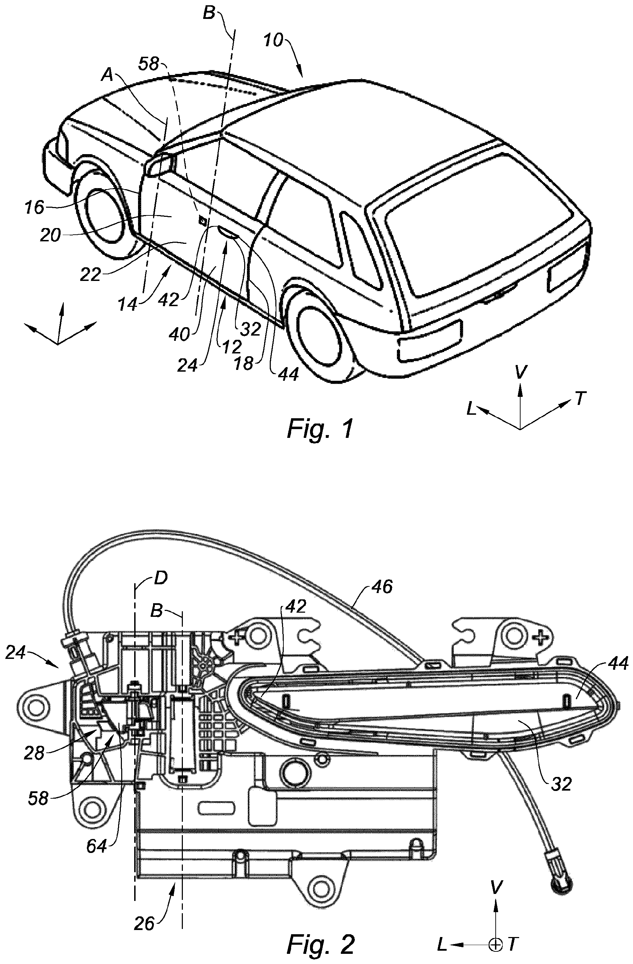

A noter que dans la présente demande de brevet, les termes « avant » et « arrière » doivent s'entendre par rapport à la direction générale longitudinale du véhicule, c'est-à-dire de la gauche vers la droite de la figure 1.

On a représenté à la figure 1 un véhicule automobile 10 qui est équipé d'un système de verrouillage 12 pour ouvrant, selon l'invention.

Le système de verrouillage 12 comprend un ouvrant 14 qui s'étend longitudinalement, dans un plan vertical, depuis un bord avant 16 jusqu'à un bord arrière 18, l'ouvrant 14 comprenant une zone centrale 20 qui est interposée longitudinalement entre le bord avant 16 et le bord arrière 18.

L'ouvrant 14 est délimité par une face externe 22 d'habillage qui est agencée à l'extérieur du véhicule.

Aussi, l'ouvrant 14 est monté pivotant entre une position fermée, illustrée à la figure 1, et une position ouverte, autour d'un axe A d'ouverture qui s'étend verticalement, au voisinage du bord avant 16 de l'ouvrant 14.

En référence aux figures 2 à 4, le système de verrouillage 12 comporte une poignée 24 qui comprend un châssis 26, un mécanisme d'ouverture d'un verrou 36 de l'ouvrant 14, et un premier système de sécurité inertiel 28 qui vise à empêcher l'ouverture intempestive de l'ouvrant 14 en cas de choc violent du véhicule 10 contre un obstacle.

Le châssis 26 présente globalement la forme d'une plaque qui s'étend dans le plan de l'ouvrant 14 et qui est fixée sur une structure (non représentée) de l'ouvrant par des vis (non représentées) par exemple.

Le mécanisme d'ouverture du verrou 36 comporte un levier de préhension 30, un élément de préhension 32 et un levier de transmission 34.

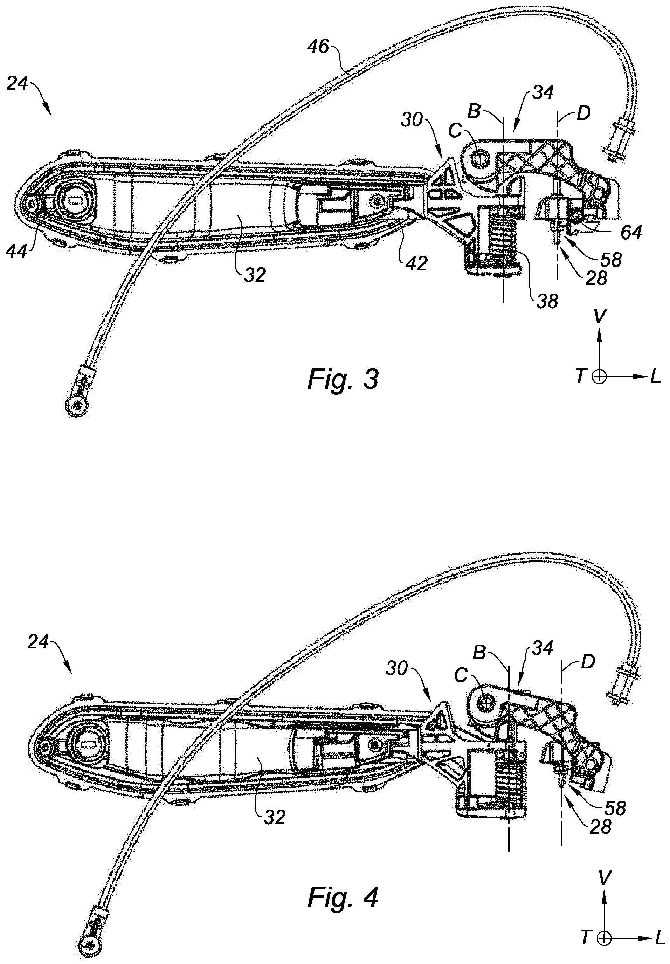

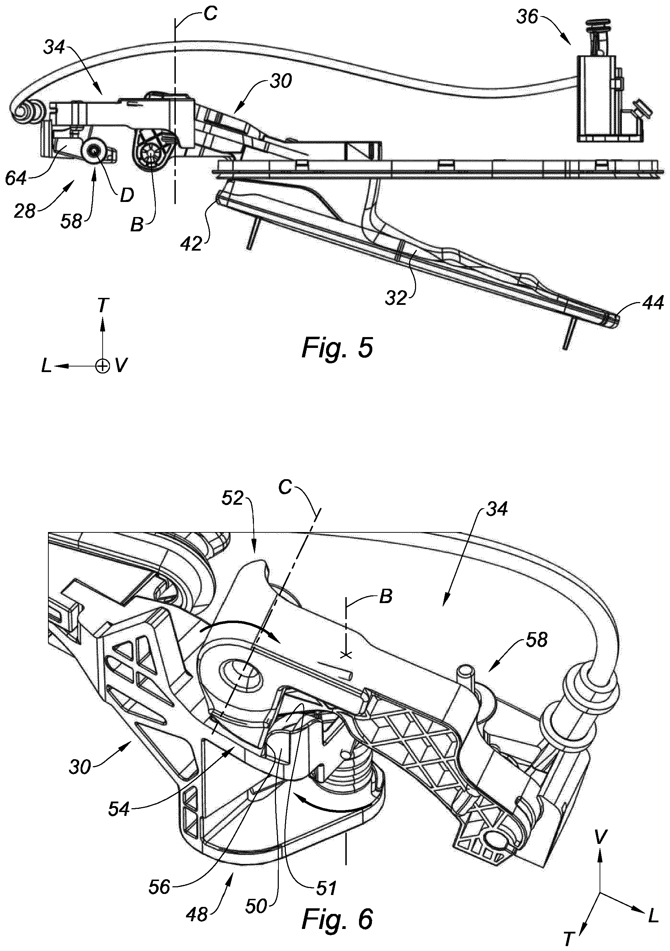

Le levier de préhension 30 est monté mobile en rotation par rapport au châssis 26 autour d'un premier axe B de rotation vertical, entre une position de repos illustrée aux figures 2 et 3, et une position de commande pour l'ouverture du verrou 36 de l'ouvrant 14, illustrée aux figures 4 et 5.

Le levier de préhension 30 est rappelé élastiquement vers sa position de repos par un ressort 38 hélicoïdal qui s'étend verticalement autour de l'axe B de rotation du levier de préhension et qui est relié au châssis 26.

De façon complémentaire, l'élément de préhension 32 est conçu pour permettre à un utilisateur d'actionner le levier de préhension 30.

A cet effet, comme on peut le voir à la figure 1, l'élément de préhension 32 est agencé d'un côté externe de l'ouvrant 14, dans un logement 40 formé par la face externe 22 de l'ouvrant 14, l'élément de préhension 32 étant solidaire du levier de préhension 30 pour entraîner le levier de préhension 30 en rotation lorsque l'utilisateur actionne l'élément de préhension 32.

L'élément de préhension 32 présente une forme de poignée allongée qui s'étend longitudinalement depuis une extrémité avant 42 jusqu'à son extrémité arrière 44.

On notera que l'élément de préhension 32 est représenté sans son capot d'habillage sur les figures 2, et 4 à 6, capot d'habillage qui affleure la face externe 22 de l'ouvrant lorsque le levier de préhension 30 occupe sa position de repos.

Aussi, le levier de préhension 30 est agencé de façon à entraîner en mouvement le levier de transmission 34, afin d'actionner l'ouverture du verrou de l'ouvrant 14.

Dans ce but, le levier de transmission 34 est monté pivotant par rapport au châssis 26 autour d'un second axe C de rotation transversal, entre une position de repos illustrée aux figures 2 et 3, et une position d'actionnement illustrée aux figures 4 et 5, dans laquelle le levier de transmission 34 actionne l'ouverture du verrou de l'ouvrant 14.

De plus, en référence à la figure 6, l'extrémité avant 48 du levier de préhension 30 délimite une came 50 qui présente un profil 51 globalement de la forme d'une portion sphérique.

Complémentairement, l'extrémité arrière 52 du levier de transmission 34 comporte un suiveur 54 délimitant une face d'appui 56 qui s'étend transversalement en regard de la came 50.

La came 50 et le suiveur 54 sont agencés de façon à transformer le mouvement de rotation du levier de préhension 30 autour de son axe B vertical, en un mouvement de rotation du levier d'actionnement 34 autour de son axe C transversal.

Selon un exemple de réalisation préféré de l'invention, la poignée 24 est une poignée du type affleurante, aussi appelée poignée « flush » selon la dénomination anglaise, c'est-à-dire que l'élément de préhension 32 affleure la face externe 22 de l'ouvrant 14 et se fond visuellement avec la face externe 22 de l'ouvrant 14 lorsque le levier de préhension 30 occupe sa position de repos.

Ce type de poignée 24 est décrit dans le document EP-A1-3106596 auquel il convient de se rapporter pour plus de détails.

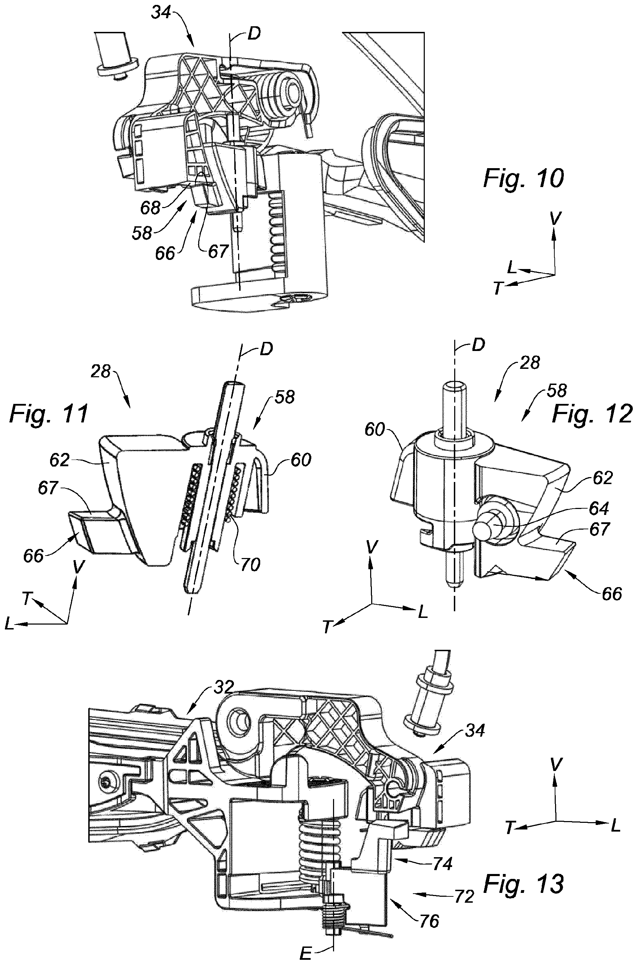

Selon un autre aspect, le système de sécurité inertiel 28 comporte un balancier 58 représenté en détails aux figures 11 et 12, qui s'étend longitudinalement, depuis une extrémité arrière 60, jusqu'à une extrémité avant 62 qui porte une masse d'inertie 64.

L'extrémité avant 62 du balancier 58 comprend un doigt de blocage 66 qui fait saillie longitudinalement vers l'avant et qui délimite une face de blocage 67 s'étendant radialement et préférentiellement perpendiculairement à l'axe D de rotation du balancier 58.

La face de blocage 67 du balancier 58 est conçue pour coopérer avec une face de blocage 68 délimitée par le levier de transmission 34, qui s'étend globalement parallèlement à la face de blocage 67 du balancier 58, pour s'opposer à la rotation du levier de transmission 34 depuis sa position de repos vers sa position d'actionnement, en cas de choc du véhicule, comme on peut le voir à la figure 10.

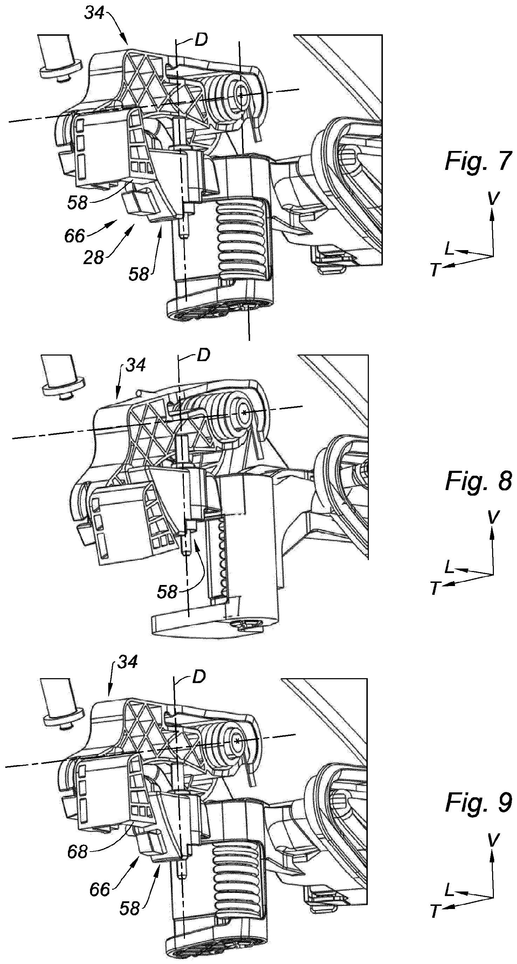

A cet effet, le balancier 58 est monté pivotant autour d'un troisième axe D de rotation vertical, entre une position de repos illustrée aux figures 7 et 8, et une position de blocage illustrée aux figures 9 et 10, dans laquelle le doigt de blocage 66 du balancier 58 est positionné sur le chemin du levier de transmission 34, de sorte que la face de blocage 68 du levier de transmission 34 heurte le doigt de blocage du balancier 58 pour empêcher la rotation du levier de transmission 3, de façon à bloquer l'ouverture de l'ouvrant 14.

L'axe D de rotation du balancier 58 est interposé entre l'extrémité arrière 60 et l'extrémité avant 62 du balancier 58.

Selon un exemple de réalisation préféré de l'invention, le système de sécurité inertiel 28 est un système réversible, c'est-à-dire que le balancier 58 occupe sa position de blocage de façon temporaire, pour permettre l'ouverture de l'ouvrant 14 dans un court délai suivant l'actionnement du système de sécurité inertiel 28.

Dans ce but, en référence à la figure 11, le balancier 58 est équipé d'un ressort hélicoïdal 70 qui s'étend autour de l'axe D de rotation du balancier 58 et qui coopère avec le châssis pour rappeler élastiquement le balancier 58 depuis sa position de blocage vers sa position de repos.

Ainsi, le balancier 58 est rappelé élastiquement dans sa position initiale de repos lorsque l'accélération appliquée sur le balancier 58 redevient nulle.

Le balancier 58 est conçu pour être entraîné depuis sa position de repos jusqu'à sa position de blocage lorsque l'accélération de la première masse d'inertie 64 est comprise dans une première plage de valeurs comprise entre 5G et 15G par exemple, l'unité G d'accélération valant 9,80665 m·s⁻².

Le premier système de sécurité inertiel 28 est donc très réactif et rapide à passer dans une position de blocage.

Selon l'invention, la masse d'inertie 64 du balancier 58 est agencée longitudinalement en avant de l'extrémité avant 42 de l'élément de préhension 30, comme on peut le voir aux figures 2, 3 et 5.

Plus particulièrement, la masse d'inertie 64 du balancier 58 est agencée longitudinalement en avant de l'axe B de rotation du levier de préhension 30, l'axe B de rotation du levier de préhension 30 étant agencé en avant de l'extrémité avant 42 de l'élément de préhension 30.

D'une façon générale, en référence à la figure 1, la masse d'inertie 64 est agencée longitudinalement entre la zone centrale 20 de l'ouvrant 14 et l'axe de rotation B du levier de préhension 30.

En effet, on constate qu'au court d'un choc violent du véhicule contre un obstacle, la zone centrale 20 de l'ouvrant 14 se déforme avec plus de vélocité que la périphérie de l'ouvrant 14, de part la plus grande souplesse de la zone centrale 20 de l'ouvrant 14 par rapport à la périphérie de l'ouvrant 14.

Ainsi, plus la masse d'inertie 64 du système de sécurité inertiel 28 est agencée proche de la zone centrale 20 de l'ouvrant 14, plus le système de sécurité inertiel 28 est réactif pour bloquer l'ouverture le mécanisme d'ouverture de l'ouvrant 14.

Selon une variante de réalisation de l'invention représentée à la figure 13, la poignée 24 comporte un second système de sécurité inertiel 72 qui comprend un balancier 74 qui porte une masse d'inertie 76.

Le balancier 74 est monté pivotant autour d'un axe E de rotation vertical, entre une position de repos illustrée à la figure 13, dans laquelle le balancier autorise la rotation du levier de transmission 34 jusqu'à sa position d'actionnement, et une position de blocage (non représentée) dans laquelle le balancier 74 empêche la rotation du levier de transmission 34, en cas de choc.

La masse d'inertie 76 du second système de sécurité inertiel 72 est agencée longitudinalement en avant de l'extrémité avant 42 de l'élément de préhension 32, pour les mêmes raisons décrites précédemment pour le premier système de sécurité inertiel 28.

De plus, le second système de sécurité inertiel 72 et le premier système de sécurité inertiel 28 sont conçus pour être activés chacun en réponse à une plage d'intensités de chocs différente.

De préférence, le second système de sécurité inertiel 72 est un système du type irréversible, c'est-à-dire que le balancier 74 reste dans sa position de blocage après avoir subi une accélération.

Ce type de système inertiel irréversible est décrit notamment dans le document WO-2006003197 auquel il convient de se rapporter pour plus de détails.

La présente description de l'invention est donnée à titre d'exemple non limitatif.

L'axe D de rotation du balancier 58 du premier système de sécurité inertiel, l'axe B de rotation du levier de préhension 30 et l'axe E de rotation du balancier 74 du second système de sécurité inertiel sont tous les trois parallèles.

## Revendications

1. Système de verrouillage (12) pour ouvrant de véhicule (10) automobile comprenant un ouvrant (14) qui s'étend longitudinalement, dans un plan vertical, depuis un bord avant (16) jusqu'à un bord arrière (18), l'ouvrant (14) comprenant une zone centrale (20) qui est interposée longitudinalement entre le bord (16) avant et le bord arrière (18), et le système de verrouillage (12) comportant une poignée (24) qui comprend :
- un châssis (26) qui est adapté pour être fixé sur l'ouvrant (14),
- un levier de préhension (30) qui est monté mobile en rotation par rapport au châssis (26) autour d'un premier axe (B) de rotation, entre au moins une position de repos et une position de commande pour l'ouverture d'un verrou de l'ouvrant (14),
- un élément de préhension (32) qui est agencé d'un côté externe de l'ouvrant (14) et qui est conçu pour permettre à un utilisateur d'actionner le levier de préhension (30), l'élément de préhension (32) étant délimité longitudinalement par une extrémité avant (42) et une extrémité arrière (44),
- un levier de transmission (34) qui est monté pivotant par rapport au châssis (26) autour d'un second axe (C) de rotation, entre une position de repos et une position d'actionnement dans laquelle le levier de transmission (34) actionne l'ouverture d'un verrou, le levier de transmission (34) étant entraîné en rotation par le levier de préhension (30),
- au moins un premier système de sécurité inertiel (28) qui est monté sur le châssis (26) et qui comporte un balancier (58) qui porte une masse d'inertie (64), le balancier (58) étant monté pivotant entre une position de repos et une position de blocage dans laquelle le balancier (58) empêche la rotation du levier de transmission (34), en cas de choc,
**caractérisé en ce que** l'axe (B) de rotation du levier de préhension (30) s'étend globalement verticalement à l'avant de l'extrémité avant (42) de l'élément de préhension (32), la masse d'inertie (64) étant agencée longitudinalement en avant de l'axe (B) de rotation du levier de préhension (30).

2. Système de verrouillage (12) selon la revendication précédente, **caractérisé en ce que** la masse d'inertie (64) est adaptée pour être agencée longitudinalement entre la zone centrale (20) de l'ouvrant (14) et l'axe (B) de rotation du levier de préhension (30).

3. Système de verrouillage (12) selon l'une quelconque des revendications précédentes, **caractérisé en ce que** l'élément de préhension (32) présente une forme allongée qui s'étend longitudinalement depuis son extrémité avant (42) jusqu'à son extrémité arrière (44).

4. Système de verrouillage (12) selon l'une quelconque des revendications précédentes, **caractérisé en ce que** le second axe (C) de rotation du levier de transmission (34) s'étend transversalement, perpendiculairement à l'axe (B) de rotation du levier de préhension (30).

5. Système de verrouillage (12) selon l'une quelconque des revendications précédentes, **caractérisé en ce que** le balancier (58) s'étend longitudinalement, depuis une extrémité arrière (60), jusqu'à une extrémité avant (62) qui porte la masse d'inertie (64) et qui comprend un doigt de blocage (66) conçu pour coopérer avec une face de blocage (68) délimitée par le levier de transmission (34) pour s'opposer à la rotation du levier de transmission (34) en cas de choc, le balancier (58) étant monté pivotant autour d'un troisième axe (D) de rotation vertical qui est interposé entre l'extrémité arrière (60) et l'extrémité avant (62) du balancier (58).

6. Système de verrouillage (12) selon l'une quelconque des revendications précédentes, **caractérisé en ce que** l'élément de préhension (32) est adapté pour affleurer une face externe (22) de l'ouvrant (14) lorsque le levier de préhension (30) occupe sa position de repos, ladite face externe (22) étant destinée à être agencée à l'extérieur du véhicule.

7. Système de verrouillage (12) selon l'une quelconque des revendications précédentes, **caractérisé en ce que** la poignée (24) comporte un second système de sécurité inertiel (72) comportant un balancier (74) qui porte une masse d'inertie (76), ledit balancier (74) étant monté pivotant entre une position de repos et une position de blocage dans laquelle le balancier empêche la rotation du levier de transmission (34), en cas de choc, la masse d'inertie (76) du second système de sécurité (72) étant agencée longitudinalement en avant de l'extrémité avant (42) de l'élément de préhension (32), et **en ce que** le second système (72) de sécurité et le premier système de sécurité (28) sont conçus pour être activés chacun en réponse à une plage d'intensités de chocs différente.

8. Ouvrant (14) de véhicule (10) automobile comprenant un système de verrouillage selon l'une quelconque des revendications précédentes.

## Patentansprüche

1. Verriegelungssystem (12) für ein Öffnungselement eines Kraftfahrzeugs (10), umfassend ein Öffnungselement (14), das sich der Länge nach in einer vertikalen Ebene von einem vorderen Rand (16) bis zu einem hinteren Rand (18) erstreckt, wobei das Öffnungselement (14) eine zentrale Zone (20) umfasst, die der Länge nach zwischen dem vorderen Rand (16) und dem hinteren Rand (18) zwischengefügt ist, und das Verriegelungssystem (12) einen Griff (24) beinhaltet, der Folgendes umfasst:
- ein Gestell (26), das angepasst ist, um an dem Öffnungselement (14) befestigt zu werden,
- einen Greifhebel (30), der in Bezug auf das Gestell (26) um eine erste Drehachse (B) herum zwischen mindestens einer Ruheposition und einer Steuerungsposition zum Öffnen eines Riegels des Öffnungselements (14) drehbeweglich montiert ist,
- ein Greifelement (32), das an einer äußeren Seite des Öffnungselements (14) angeordnet ist, und das gestaltet ist, um es einem Nutzer zu ermöglichen, den Greifhebel (30) zu betätigen, wobei das Greifelement (32) der Länge nach durch ein vorderes Ende (42) und ein hinteres Ende (44) begrenzt wird,
- einen Übertragungshebel (34), der in Bezug auf das Gestell (26) um eine zweite Drehachse (C) herum zwischen einer Ruheposition und einer Betätigungsposition schwenkbar montiert ist, in der der Übertragungshebel (34) das Öffnen eines Riegels betätigt, wobei der Übertragungshebel (34) durch den Greifhebel (30) in Drehung angetrieben wird,
- mindestens ein erstes Trägheitssicherheitssystem (28), das auf dem Gestell (26) montiert ist und das einen Schwinghebel (58) beinhaltet, die eine Trägheitsmasse (64) trägt, wobei der Schwinghebel (58) zwischen einer Ruheposition und einer Sperrposition schwenkbar montiert ist, in der der Schwinghebel (58) die Drehung des Übertragungshebels (34) im Falle eines Anpralls verhindert,
**dadurch gekennzeichnet, dass** sich die Drehachse (B) des Greifhebels (30) im Allgemeinen vertikal vor dem vorderen Ende (42) des Greifelements (32) erstreckt, wobei die Trägheitsmasse (64) der Länge nach vorwärts der Drehachse (B) des Greifhebels (30) angeordnet ist.

2. Verriegelungssystem (12) nach dem vorstehenden Anspruch, **dadurch gekennzeichnet, dass** die Trägheitsmasse (64) angepasst ist, um der Länge nach zwischen der zentralen Zone (20) des Öffnungselements (14) und der Drehachse (B) des Greifhebels (30) angeordnet zu werden.

3. Verriegelungssystem (12) nach einem der vorstehenden Ansprüche, **dadurch gekennzeichnet, dass** das Greifelement (32) eine längliche Form aufweist, die sich der Länge nach von seinem vorderen Ende (42) bis zu seinem hinteren Ende (44) erstreckt.

4. Verriegelungssystem (12) nach einem der vorstehenden Ansprüche, **dadurch gekennzeichnet, dass** sich die zweite Drehachse (C) des Übertragungshebels (34) quer, senkrecht zu der Drehachse (B) des Greifhebels (30) erstreckt.

5. Verriegelungssystem (12) nach einem der vorstehenden Ansprüche, **dadurch gekennzeichnet, dass** sich der Schwinghebel (58) der Länge nach von einem hinteren Ende (60) bis zu einem vorderen Ende (62) erstreckt, das die Trägheitsmasse (64) trägt, und das einen Sperrstift (66) umfasst, der gestaltet ist, um mit einer Sperrseite (68) zusammenzuwirken, die durch den Übertragungshebel (34) begrenzt ist, um sich der Drehung des Übertragungshebels (34) im Falle eines Anpralls zu widersetzen, wobei der Schwinghebel (58) um eine vertikale dritte Drehachse (D) herum schwenkbar montiert ist, die zwischen dem hinteren Ende (60) und dem vorderen Ende (62) des Schwinghebels (58) zwischengefügt ist.

6. Verriegelungssystem (12) nach einem der vorstehenden Ansprüche, **dadurch gekennzeichnet, dass** das Greifelement (32) angepasst ist, um eine Außenseite (22) des Öffnungselements (14) leicht zu berühren, wenn der Greifhebel (30) seine Ruheposition einnimmt, wobei die Außenseite (22) dazu bestimmt ist, außerhalb des Fahrzeugs angeordnet zu werden.

7. Verriegelungssystem (12) nach einem der vorstehenden Ansprüche, **dadurch gekennzeichnet, dass** der Griff (24) ein zweites Trägheitssicherheitssystem (72) beinhaltet, das einen Schwinghebel (74) beinhaltet, der eine Trägheitsmasse (76) trägt, wobei der Schwinghebel (74) zwischen einer Ruheposition und einer Sperrposition schwenkbar montiert ist, in der der Schwinghebel die Drehung des Übertragungshebels (34) im Falle eines Anpralls verhindert, wobei die Trägheitsmasse (76) des zweiten Sicherheitssystems (72) der Lange nach vorwärts des vorderen Endes (42) des Greifelements (32) angeordnet ist, und dadurch, dass das zweite Sicherheitssystem (72) und das erste Sicherheitssystem (28) gestaltet sind, um jeweils als Reaktion auf einen unterschiedlichen Bereich an Anprallstärken aktiviert zu werden.

8. Öffnungselement (14) eines Kraftfahrzeugs (10), ein Verriegelungssystem nach einem der vorstehenden Ansprüche umfassend.

## Claims

1. A locking system (12) for a door leaf of a motor vehicle (10) comprising a door leaf (14) which extends longitudinally, in a vertical plane, from a front edge (16) up to a rear edge (18), the door leaf (14) comprising a central area (20) which is interposed longitudinally between the front edge (16) and the rear edge (18), and the locking system (12) comprising a handle (24) which comprises:
- a frame (26) which is adapted to be fastened on the door leaf (14),
- a gripping lever (30) which is mounted movable in rotation relative to the frame (26) about a first axis (B) of rotation, between at least a rest position and a control position for opening a lock of the door leaf (14),
- a gripping element (32) which is arranged on an outer side of the door leaf (14) and which is designed so as to enable a user to actuate the gripping lever (30), the gripping element (32) being delimited longitudinally by a front end (42) and a rear end (44),
- a transmission lever (34) which is pivotally mounted relative to the frame (26) about a second axis (C) of rotation, between a rest position and an actuation position in which the transmission lever (34) actuates the opening of a lock, the transmission lever (34) being driven in rotation by the gripping lever (30),
- at least one first inertial safety system (28) which is mounted on the frame (26) and which includes a rocker (58) which carries an inertial mass (64), the rocker (58) being pivotally mounted between a rest position and a blocking position in which the rocker (58) prevents the rotation of the transmission lever (34), in the event of an impact,
**characterized in that** the axis (B) of rotation of the gripping lever (30) extends generally vertically at the front of the front end (42) of the gripping element (32), the inertial mass (64) being arranged longitudinally at the front of the axis (B) of rotation of the gripping lever (30).

2. The locking system (12) according to the preceding claim, **characterized in that** the inertial mass (64) is adapted to be arranged longitudinally between the central area (20) of the door leaf (14) and the axis (B) of rotation of the gripping lever (30).

3. The locking system (12) according to any one of the preceding claims, **characterized in that** the gripping element (32) has an elongated shape which extends longitudinally from its front end (42) up to its rear end (44).

4. The locking system (12) according to any one of the preceding claims, **characterized in that** the second axis (C) of rotation of the transmission lever (34) extends transversely, perpendicular to the axis (B) of rotation of the gripping lever (30).

5. The locking system (12) according to any one of the preceding claims, **characterized in that** the rocker (58) extends longitudinally, from a rear end (60), up to a front end (62) which carries the inertial mass (64) and which comprises a blocking finger (66) designed so as to cooperate with a blocking face (68) delimited by the transmission lever (34) to oppose the rotation of the transmission lever (34) in the event of an impact, the rocker (58) being pivotally mounted about a third vertical axis (D) of rotation which is interposed between the rear end (60) and the front end (62) of the rocker (58).

6. The locking system (12) according to any one of the preceding claims, **characterized in that** the gripping element (32) is adapted to be flush with an outer face (22) of the door leaf (14) when the gripping lever (30) occupies its rest position, said outer face (22) being intended to be arranged outside the vehicle.

7. The locking system (12) according to any one of the preceding claims, **characterized in that** the handle (24) comprises a second inertial safety system (72) including a rocker (74) which carries an inertial mass (76), said rocker (74) being pivotally mounted between a rest position and a blocking position in which the rocker prevents the rotation of the transmission lever (34), in the event of an impact, the inertial mass (76) of the second safety system (72) being arranged longitudinally at the front of the front end (42) of the gripping element (32), and **in that** each of the second safety system (72) and the first safety system (28) is designed so as to be activated in response to a different range of impact intensities.

8. A door leaf (14) of a motor vehicle (10) comprising a locking system according to any one of the preceding claims.
